# EUROPÄISCHE PATENTSCHRIFT

(11) **EP 0 339 311 B1**
(45) Veröffentlichungstag und Bekanntmachung des Hinweises auf die Patenterteilung: **22.06.1994**
(21) Anmeldenummer: 89105936.2
(22) Anmeldetag: 05.04.1989
(51) Int. Cl.: H04N 3/233

(54) **Schaltungsanordnung zur Korrektur von Geometrieverzerrungen auf dem Bildschirm einer Kathodenstrahlröhre**
Circuit for the correction of geometry distortions on the screen of a cathode ray tube
Circuit pour la correction des distorsions de géométrie sur l'écran d'un tube cathodique

(30) Priorität: 29.04.1988 DE 3814563
(43) Veröffentlichungstag der Anmeldung: 02.11.1989
(73) Patentinhaber: Deutsche Thomson-Brandt GmbH, 78003 Villingen-Schwenningen (DE)
(72) Erfinder: Hartmann, Uwe, D-8391 Untergriesbach (DE); Ohnemus, Fritz, D-7730 Villingen-Schwenningen (DE)

(56) Entgegenhaltungen:
- EP-A- 0 201 336
- WO-A-86/00170

## Beschreibung

Die vorliegende Erfindung betrifft eine Schaltungsanordnung zur Korrektur von Geometrieverzerrungen auf dem Bildschirm einer Kathodenstrahlröhre durch Einkopplung eines zusätzlichen Stromes in die Vertikalablenkwicklung.

Bei Farbbildröhren ergeben sich durch die Tatsache, daß der Krümmungsmittelpunkt der Bildschirmfläche und der Mittelpunkt für die Elektronenstrahlablenkung sehr weit auseinander liegen, sichtbare Geometriefehler des wiedergegebenen Rasters. Es ergeben sich z.B. Kissenfehler in Nord-Süd und Ost-West-Richtung, die durch bekannte Korrekturschaltungsmaßnahmen zu beseitigen sind. Zur Beseitigung des sognannten Tangensfehlers wird in den horizontalen Ablenkkreis ein auf 37 KHz abgestimmter Schwingkreis eingefügt, der im Bereich der Zeilenmitte eine Vergrößerung und am Zeilenanfang und Zeilenende eine Verkleinerung der Ablenkung verursacht.

Zur Beseitigung von Kissenfehlern wird ein Korrekturstrom in den vertikalen Ablenkkreis eingekoppelt, der zumeist kosinusförmig ist und den vertikalen Ablenkstrom moduliert.

Ein unter dem Begriff Mövenflügel (gull-wing) bekannter Fehler äußert sich durch eine Verbiegung der Zeilen in Form eines Mövenflügels, der in der Mitte der oberen und unteren Bildhälfte auftritt. Ein kosinusförmiger Korrekturstrom mit doppelter Zeilenfrequenz, der im oberen, im mittleren und unteren Bildbereich zu Null gemacht wird, beseitigt diesen Fehler. Zur Beseitigung dieses gullwing-Fehlers dient zum Beispiel eine Schaltungsanordnung nach der Patentanmeldung WO-A-8600170.

Bei Bildröhren mit extrem flachem Bildschirm und rechteckförmigem Format macht sich ein weiterer Geometriefehler unangenehm bemerkbar. Er tritt in den Bereichen des Mövenflügelfehlers zusätzlich auf. Er ist nach Beseitigung des gullwing-Fehlers noch vorhanden und äußert sich dadurch, daß die Zeilen am Anfang und am Ende abgebogen werden. Das Abbiegen der Zeilen geschieht während der ersten und letzten etwa 5 Mikrosekunden einer Zeile. In der oberen Bildschirmhälfte sind die Zeilen nach unten und in der unteren Bildschirmhälfte nach oben abgebogen. Der zur Korrektur dieser Geometrieverzerrung erforderliche Strom muß während der beiden Bildhälften demnach die entgegengesetzten Richtungen haben. Zur Korrektur dieses "bending-Fehlers" wird am Zeilenende ein ansteigender und am Zeilenanfang ein abfallender Korrekturstrom benötigt. Diesen Fehler berücksichtigt die Schaltung nach der oben zitierten Schrift (WO-A-8600170) jedoch nicht.

Der Erfindung liegt die Aufgabe zugrunde, den durch das dieser Röhre spezifische Ablenkfeld verursachten bending-Fehler zu beseitigen und somit die Qualität eines Bildes auf einer Bildröhre mit extrem flachem Bildschirm weiter zu verbessern. Diese Aufgabe wird durch die im Patentanspruch angegebene Erfindung gelöst.

Nachstehend wird die Erfindung an einem Ausführungsbeispiel mit Hilfe der Zeichnung beschrieben.
- Figur 1: zeigt ein Blockschaltbild zur Durchführung des angemeldeten Verfahrens zur Beseitigung des oben beschriebenen Geometriefehlers
- Figur 2: zeigt ein detailliertes Schaltbild als Ausführungsbeispiel des Blockschaltbildes gemäß Figur 1
- Figur 3: zeigt die das Schaltbild gemäß Figur 2 erläuternden Diagramme.

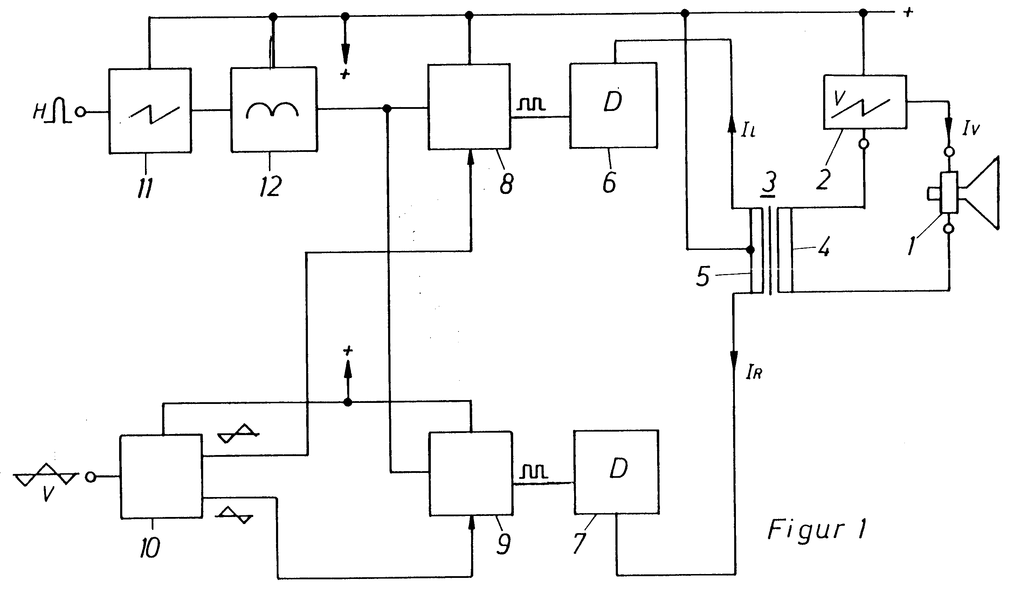

In Figur 1 ist ein prinzipieller Schaltungsaufbau dargestellt, mit welchem die gestellte Aufgabe zur Beseitigung des Bending-Fehlers gelöst werden kann. Es handelt sich um eine Schaltungsanordnung, mit welcher der erforderliche Korrekturstrom erzeugt wird. Durch diese Ablenkwicklung 1 fließt der von der Vertikalablenkschaltung 2 erzeugte Vertikalablenkstrom, dem der Korrekturstrom überlagert wird. Dieser wird über einen Übertrager 3 eingekoppelt, dessen Sekundärwicklung 4 in Serie zur Ablenkwicklung 1 liegt. Der Übertrager 3 besitzt eine Primärwicklung 5, die einen an der Betriebsspannung UB liegenden Mittelabgriff besitzt. Die beiden Enden der Primärwicklung 5 sind symmetrisch mit je einem im D-Betrieb arbeitenden Verstärker 6 bzw. 7 verbunden. Beide Verstärker arbeiten gleichartig, wobei z.B. der Verstärker 6 während der oberen Bildhälfte und der Verstärker 7 während der unteren Bildhälfte aktiv ist. Durch die im D-Betrieb arbeitenden Verstärker 6 und 7 ist der zur Erzeugung des Korrekturstroms erforderliche Leistungsverbrauch äußerst gering. Die Verstärker 6 und 7 werden von horizontalfrequenten Impulsen H angesteuert, welche zusätzlich in ihrer Breite noch vertikalfrequenz moduliert sein können. Diese Impulse werden von Impulsbreitenmodulatoren 8 und 9 erzeugt, welche abwechselnd während der oberen und unteren Bildhälfte aktiviert werden. Dies wird dadurch erreicht, daß aus einer Modulatorschaltung 10 gegenphasige vertikalfrequente Signale die Stufen 8 bzw. 9 durchgeschaltet werden. Zwecks Erzeugung des Ansteuersignals für die Verstärker 6 und 7 wird aus einem horizontalfrequenten Impuls H in einem Sägezahngenerator 11 eine sägezahnförmige Spannung gebildet, die in einer Schaltung 12 in eine parabelförmige Spannung umgewandelt wird, welche zur Ansteuerung der Impulsbreitenmodulatoren 8 und 9 dienen.

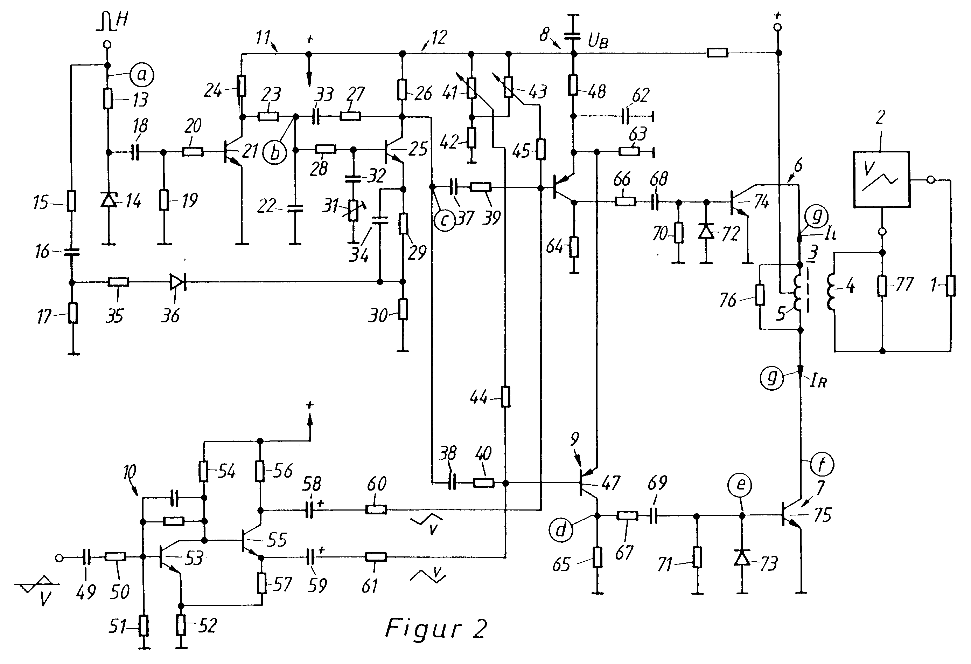

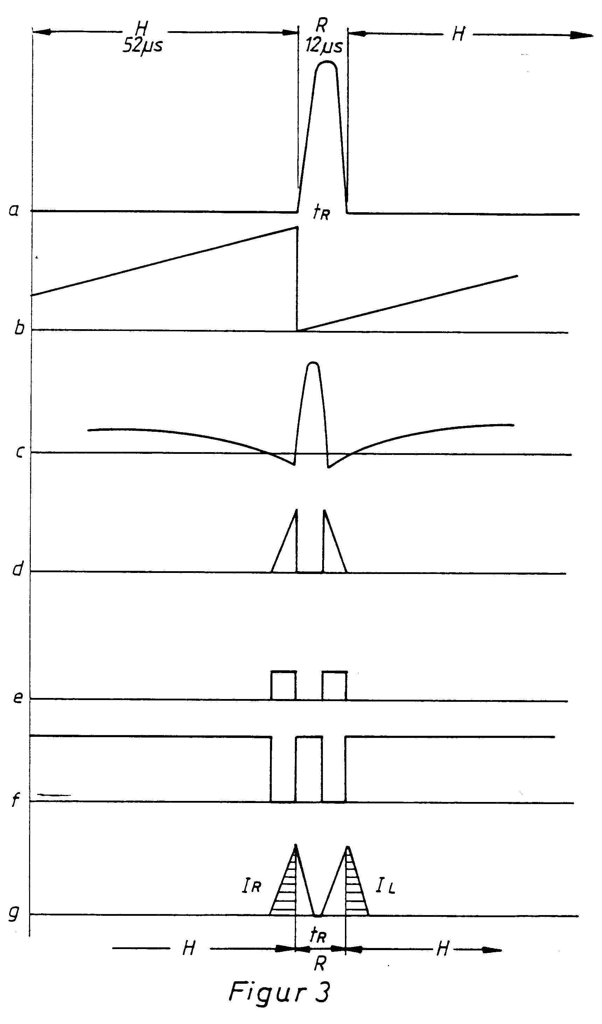

Zur Erläuterung der Wirkungsweise der Schaltung nach Figur 1 wird diese an einem ausführlichen Schaltbild mit Hilfe der Figur 2 erläutert. Diagramme gemäß Figur 3 dienen zur Ergänzung der Beschreibung der Figur 2 an dort gekennzeichneten Punkten.

Ein zeilenfrequenter H-Impuls (Figur 3a) gelangt über den Widerstand 13 und wird mit Hilfe der Zenerdiode 14 begrenzt und mit Hilfe des Kondensators 18 und des Widerstandes 19 differenziert. Ein kurzer Impuls gelangt über den Widerstand 20 an den Transistor 21 des Sägezahngenerators 11, so daß der Kondensator 22 über den Widerstand 23 entladen wird, der zuvor über den Widerstand 24 aus der Betriebsspannung UB aufgeladen worden war. Die Sägezahnspannung (Figur 3b) wird in dem Parabelspannungsgenerator 12, der aus dem Transistor 25, den Widerständen 26, 27, 28, 29, 30 und 31 und den Kondensatoren 32, 33 und 34 besteht, zu einer Parabel (Figur 3c) umgeformt. In einer weiteren Differenzierschaltung 15, 16, 17 entsteht am Widerstand 17 der differenzierte H-Impuls, dessen positiver Anteil über den Widerstand 35 und die Diode 36 dem Emitter des Transistors 25 zugeführt wird, so daß dieser zu Beginn des Zeilenrücklaufs gesperrt wird. Zwecks Symmetrierung der Parabel dient der Widerstand 31, der zu diesem Zweck einstellbar ausgebildet ist. Die derart erzeugte Parabelspannung gelangt parallel an die Impulsbreiten-Modulatoren 8 und 9 über die Kondensatoren 37, 38 und die Widerstände 39 und 40. Durch die Widerstandsteiler 41, 42 und 43, 42 sowie 44 und 45 können die Arbeitspunkte der Impulsbreiten-Modulatoren eingestellt werden.

Die Transistoren 46 und 47 der Impulsbreiten-Modulatoren 8 und 9 werden durch etwa dreieckförmige vertikalfrequente gegenphasige Spannungen abwechselnd aktiv geschaltet. Diese Spannungen werden dadurch erzeugt, daß ein vertikalfrequentes dreieckförmiges Signal über den Kondensator 49 und den Widerstand 50 an den Basiswiderstand 51 eines Verstärkers 53 gelegt ist. Die am Kollektorwiderstand 54 entstehende Spannung wird auf eine aus dem Transistor 55 und den Widerständen 56 und 57 und 52 bestehende Phase-Splitter-Schaltung gegeben. Die gegenphasigen Spannungen gelangen über Kondensatoren 58 und 59 sowie Widerstände 60 und 61 an die Basen der Transistoren 46 und 47. Die beiden Transistoren 46 und 47 besitzen einen gemeinsamen Emitterwiderstand 48. Der Kondensator 62 ist für zeilenfrequente Ströme ausreichend niederohmig, er kann jedoch die Spannungsänderungen, die durch das vertikalfrequente Signal hervorgerufen werden, nicht konstant halten. Dadurch entsteht am Widerstand 63 eine parabelförmige Spannung mit doppelter Vertikalfrequenz, deren positive Spitzen am Anfang, in der Mitte und am Ende des vertikalen Hinlaufs liegen.

Das Signal (Figur 3d) am Kollektor des Transistors 46 (47) wird am Kollektorwiderstand 64 (65) abgenommen und gelangt über den Widerstand 66 (67) und den Kondensator 68 (69) an den Basiswiderstand 70 (71), dem eine Diode 72 (73) zur Abschneidung negativer Spannungsspitzen parallel geschaltet ist. An den Basiswiderständen 70 und 71 entstehen Schaltspannungen (Figur 3g) , so daß die Schalttransistoren 74 und 75 durchgeschaltet werden. Während der oberen Hälfte des Bildes ist der Transistor 74 und während der unteren Hälfte des Bildes der Transistor 75 durchgeschaltet. Beide Transistoren arbeiten als Schalter und legen die Betriebsspannung UB über eine Hälfte der Primärwicklung 5 des Übertragers 3 auf Massepotential (Figur 3f). Am Ende der Zeilen in der oberen Bildhälfte wird der Transistor 74 durchgeschaltet und es baut sich ein ansteigendes Magnetfeld in der Primärwicklung 5 auf. Dieses verursacht einen ansteigenden Strom in der Sekundärwicklung 4 (Figur 3g), der sich dem Vertikal-Ablenkstrom in der Vertikalablenk-Wicklung 1 überlagert. Kurz vor Ende des Rücklaufs wird der Transistor 74, der während des ersten Teils des Rücklaufs gesperrt war, wieder durchgeschaltet und spätestens am Ende des Rücklaufs wieder abgeschaltet. Da die zweite Einschaltung während des Rücklaufs geschieht, zeigt der induzierte Strom keine sichtbare Wirkung. Er steigt bis zum voreinstellbaren Endwert (Figur 3g) wieder an. Wesentlich ist, daß der Strom spätestens bei Beendigung des Rücklaufs, d.h. zu Beginn des horizontalen Hinlaufs abgeschaltet wird. Die in der Sekundärwicklung 4 gespeicherte Energie fließt als zusätzlicher Korrekturstrom stetig abfallend in die Ablenkwicklung 1 und bringt damit die gewünschte Wirkung. Entsprechendes gilt für den Transistor 75, der für die Zeilen in der unteren Bildhälfte zuständig ist. Er besitzt die entgegengesetzte Wirkung einer entgegengesetzten Korrektur, da die Ströme durch die Mittelanzapfung der Primärwicklung 5 in entgegengesetzter Richtung fliessen. Dämpfungswiderstände 76 und 77 über den Übertragerwicklungen 5 und 4 verhindern störendes Ausschwingen infolge der unvermeidbaren Wicklungskapazitäten.

## Patentansprüche

1. Schaltungsanordnung zur Korrektur von Geometrieverzerrungen auf dem Bildschirm einer Kathodenstrahlröhre durch Einkopplung eines zusätzlichen Stromes in die Vertikalablenkwicklung, **dadurch gekennzeichnet**,
daß zwei im D-Betrieb arbeitende Schaltstufen (6; 7) vorgesehen sind, die jeweils mit den Enden einer mit einer auf Betriebspotential (UB) liegenden Mittelanzapfung versehenen Primärwicklung (5) eines Übertragers (3) verbunden sind und die zu einem vorgebbaren Zeitpunkt vor Beendigung des horizontalen Hinlaufs der Elektronenstrahlen einen bis zum Beginn des horizontalen Rücklaufs der Elektronenstrahlen und zu einem vorgebbaren Zeitpunkt vor Beendigung des horizontalen Rücklaufs der Elektronenstrahlen bis zum Beginn des horizontalen Hinlaufs der Elektronenstrahlen einen monoton ansteigenden Strom und nach Abschalten der Schaltstufen (6; 7) einen monoton abfallenden Strom in der mit der Ablenkwicklung (1) in Reihe liegenden Sekundärwicklung (4) des Übertragers (3) erzeugen, wobei jeweils der in den sichtbaren Hinlauf der Elektronenstrahlen fallende ansteigende oder abfallende Strom als Korrekturstrom dient, und daß die beiden Schaltstufen (6; 7) vertikalfrequent im Gegentakt angesteuert werden, wobei die beiden Schaltstufen (6; 7) jeweils durch einen Impulsbreitenmodulator (8 bzw. 9) angesteuert werden, und wobei die Impulsbreitenmodulatoren (8, 9) horizontalfrequente Impulse erzeugen und durch gegenphasige Spannungen abwechselnd in der oberen bzw. unteren Bildhälfte aktiv geschaltet werden.

2. Schaltungsanordnung nach Anspruch 1, **dadurch gekennzeichnet**, daß die vorgebbaren Zeitpunkte bei 5 bis 10 Mikrosekunden liegen.

## Claims

1. Circuit arrangement for the correction of geometrical distortions on the screen of a cathode ray tube by coupling an additional current into the vertical deflection winding, characterised in that, there are provided two switching stages (6; 7) operating in the D mode which are respectively connected to the ends of a primary winding (5) of a transformer (3) that is provided with a centre tap that is at operating potential (UB) and which, at a predetermined time point before the ending of the horizontal forward sweep of the electron beams {one} up to the beginning of the horizontal flyback of the electron beams and, at a predetermined time point before the ending of the horizontal flyback of the electron beams up to the beginning of the horizontal forward sweep of the electron beams, generate a steadily rising current and, after the switching stages (6; 7) switch off, a steadily falling current in the secondary winding (4) of the transformer (3) connected in series with the deflection winding (1) whereby, on each occasion, the rising or falling current occuring in the visible forward sweep of the electron beams serves as a correcting current and that the two switching stages (6; 7) are controlled in push pull at the vertical frequency, wherein the two switching stages (6; 7) are controlled by a respective pulse width modulator (8 or 9) and wherein the pulse width modulators (8, 9) generate horizontal frequency pulses and are rendered active alternately in the upper and lower halves of the picture by respective oppositely phased voltages.

2. Circuit arrangement in accordance with Claim 1, characterised in that, the predetermined time points occur at 5 to 10 microseconds.

## Revendications

1. Circuit pour la correction de distorsions de géométrie sur l'écran d'un tube cathodique par alimentation d'un courant supplémentaire dans l'enroulement de balayage vertical, **caractérisé en ce** que deux étages de commutation (6 ; 7) fonctionnant en régime pulsé sont prévus, étages qui sont reliés chacun aux extrémités d'un enroulement primaire (5) d'un transformateur, cet enroulement étant pourvu d'une prise centrale qui se trouve sur le potentiel de fonctionnement (UB), et qui produisent, à un moment qui peut être prédéterminé avant l'achèvement de l'aller horizontal des faisceaux d'électrons, jusqu'au début du retour horizontal des faisceaux d'électrons et, à un moment qui peut être prédéterminé avant l'achèvement du retour horizontal des faisceaux d'électrons, jusqu'au début de l'aller horizontal, un courant ascendant de manière monotone et, après avoir mis hors circuit les étages de commutation (6 ; 7) un courant qui retombe de manière monotone dans l'enroulement secondaire (4), monté en série avec l'enroulement de balayage (1), du transformateur (3), le courant qui monte ou qui retombe, qui tombe dans l'aller visible des faisceaux d'électrons, servant respectivement de courant de correction, et que les deux étages de commutation (6 ; 7) sont excités en fréquence verticale en push-pull, les deux étages de commutation (6 ; 7) étant respectivement excités par un modulateur de largeur d'impulsions (8 ou 9), les modulateurs de largeur d'impulsions (8, 9) générant des impulsions de fréquence horizontale et étant commutés actifs par des tensions de phase opposée en alternance dans la moitié supérieure et dans la moitié inférieure de l'image.

2. Circuit selon la revendication 1, **caractérisé en ce** que les moments qui peuvent être prédéterminés sont de 5 à 10 microsecondes.
